# EUROPÄISCHE PATENTSCHRIFT

(11) **EP 1 745 166 B1**
(45) Veröffentlichungstag und Bekanntmachung des Hinweises auf die Patenterteilung: **30.04.2008**
(21) Anmeldenummer: 05715628.3
(22) Anmeldetag: 01.03.2005
(51) Int. Cl.: D01F 2/00, D01D 1/02, D01F 2/02

(54) **LYOCELL-VERFAHREN UND -VORRICHTUNG MIT STEUERUNG DES METALLIONEN-GEHALTS**
LYOCELL METHOD AND DEVICE INVOLVING THE CONTROL OF THE METAL ION CONTENT
PROCEDE ET DISPOSITIF DE TYPE LYOCELL, A REGULATION DE LA TENEUR EN IONS METALLIQUES

(30) Priorität: 13.05.2004 DE 102004024029
(43) Veröffentlichungstag der Anmeldung: 24.01.2007
(73) Patentinhaber: Zimmer Aktiengesellschaft, 60388 Frankfurt am Main (DE)
(72) Erfinder: ZIKELI, Stefan, A-4844 Regau (AT); SCHUMANN, Werner, 07422 Bad Blankenburg (DE); GLASER, Lutz, 07407 Rudolstadt (DE); LONGIN, Michael, A-4849 Vöcklabruck (AT)
(74) Vertreter: Grünecker, Kinkeldey, Stockmair & Schwanhäusser Anwaltssozietät
(86) Internationale Anmeldenummer: PCT/EP2005/002138
(87) Internationale Veröffentlichungsnummer: WO 2005/113870

(56) Entgegenhaltungen:
- WO-A-01/27161
- WO-A-96/27035
- BUIJTENHUIJS F A ET AL: "THE DEGRADATION AND STABILIZATION OF CELLULOSE DISSOLVED IN N-METHYLMORPHOLINE-N-OXIDE (NMMO)" 1. Dezember 1986 (1986-12-01), PAPIER, DAS, EDUARD ROETHER KG. DARMSTADT, DE, PAGE(S) 615-619 , XP000601998 ISSN: 0031-1340 in der Anmeldung zitiert das ganze Dokument

## Beschreibung

Die Erfindung betrifft ein Verfahren zum Herstellen einer Lyocell-Faser aus einer Spinnmasse, die durch Beimengung eines Behandlungsmediums zu einer Cellulose, zu einer Cellulosesuspension und/oder einer Celluloselösung hergestellt wird.

Die Erfindung betrifft außerdem eine Vorrichtung zur Herstellung von Lyocell-Fasern, mit einer Mischeinrichtung, in der eine Cellulose, eine Cellulosesuspension und/oder eine Celluloselösung mit einem Behandlungsmedium beaufschlagbar ist.

Derartige Verfahren und Vorrichtungen sind aus der Lyocell-Technologie bekannt. Bei der Lyocell-Technologie werden Fäden, Fasern, Folien und Membranen als Endlosformkörper aus der Spinnmasse enthaltend Cellulose, Wasser und tertiärem Aminoxid extrudiert werden. Die Lyocell-Technologie ersetzt aufgrund ihrer Umweltverträglichkeit zunehmend die herkömmlichen Viskoseverfahren. Die Umweltverträglichkeit des Lyocell-Verfahrens rührt aus der Lösung der Cellulose ohne Derivatisierung in einem organischen, wässrigen Lösungsmittel. Aus dieser Celluloselösung werden dann Endlosformkörper, beispielsweise Fasern und Folien, extrudiert. Durch die Extrusion der Formkörper und die im Zuge der Extrusion erfolgende Orientierung und Regenerierung der Cellulose erhält man Formkörper hoher Festigkeit mit vielfältigen Anwendungsmöglichkeiten im textilen und nicht textilen Bereich. Der Name Lyocell wurde von der BISFA (International Bureau for the Standardisation of man-made Fibres) vergeben. Im Stand der Technik ist das Lyocell-Verfahren mittlerweile gut dokumentiert.

So sind als Lösungsmittel für die Cellulose aus der US-B-2179181 tertiäre Aminoxide bekannt, die Cellulose ohne Derivatisierung zu lösen vermögen. Aus diesen Lösungen können die cellulosischen Formkörper durch Fällung gewonnen werden.

Die Verarbeitung der in einem wässrigen Aminoxid, speziell N-Methylmorpholin-N-oxid (NMMNO), gelösten Cellulose ist jedoch sicherheitstechnisch nicht unproblematisch, da der Polymerisationsgrad der Cellulose beim Auflösen der Cellulose in NMMNO abnimmt. Außerdem weisen Aminoxide speziell im System NMMNO-Cellulose-Wasser im Allgemeinen eine nur begrenzte Thermostabilität sowie eine Neigung zu einer spontanen exothermen Reaktion auf. Um diese Probleme zu überwinden und Lyocell-Fasern wirtschaftlich herstellen zu können, gibt es im Stand der Technik eine Reihe von Lösungsansätzen.

So ist in der US-A-4144080 ausgeführt, dass sich bei hohen Temperaturen die Cellulose rascher in einem tertiären Amin-N-oxid auflöst und eine einheitlichere Lösung bildet, wenn die Cellulose mitsamt den bevorzugten Zugaben an tertiärem Amin-N-oxid und Wasser gemahlen wird. In der WO-94/28219 ist ein Verfahren zur Herstellung einer Celluloselösung beschrieben, bei dem gemahlener Zellstoff und eine Aminoxidlösung in eine waagerechte, zylinderförmige Mischkammer gegeben werden. Die Mischkammer weist um deren Längsachse drehbare, axial beabstandete Rührelemente auf. Als Aminoxide können dabei neben NMMNO auch N-Methylpiperidin-N-oxid, N-Methylpyrolidonoxid, Dimethylcyclohexylamin-oxid und andere verwendet werden. Die Mischung in der Mischkammer findet zwischen 65°C und 85°C statt. Gemäß der Lehre der WO-A-98/005702 wird der Zellstoff in einer Vorrichtung mit der wässrigen Lösung des tertiären Aminoxids gemischt, wobei die Mischvorrichtung ein Mischwerkzeug und einen während des Mischens rotierenden Behälter aufweist.

In der WO-A-98/005702 ist das Mischwerkzeug dahingehend verbessert, dass es als Paddel, Leiste oder Wendel ausgebildet ist und während des Mischens bevorzugt eine Belagbildung an den Innenoberflächen des Behälters verhindert: In der WO-A-96/33934 ist eine Puffervorrichtung beschrieben, die ein Mischgefäß und eine Förderschnecke als Austragseinrichtung umfasst. Auf diese Weise soll trotz einer batchweisen Zufuhr der Cellulose eine kontinuierliche Herstellung der Celluloselösung ermöglicht werden.

Das Verfahren der WO-A-96/33934 wurde mittlerweile durch das Verfahren der WO-96/33221 weiterentwickelt, bei dem eine homogene Cellulosesuspension aus zerkleinerter Cellulose und einer wässrigen Aminoxidlösung in einem einzigen Schritt hergestellt wird. Hierzu wird die zerkleinerte Cellulose mit dem flüssigen, wässrigen tertiären Aminoxid in Kontakt gebracht und so eine erste Mischung gebildet. Die erste Mischung wird auf eine Fläche schichtartig ausgebreitet und unter intensivem Mischen über diese Fläche transportiert. Dieser Prozess kann kontinuierlich durchgeführt werden. Weitere Verfahren, bei denen die Celluloselösung in Form einer dünnen Schicht behandelt wird, sind auch aus der EP-A-0356419, der DE-A-2011493 und der WO-A-94/06530 bekannt.

Auch die Zerkleinerung der Cellulose selbst ist Gegenstand von Patentveröffentlichungen. So ist in der US-A-4416698 als Vorteil erwähnt, wenn die Cellulose auf eine Teilchengröße von weniger als 0,5 mm gemahlen wird. In der WO-A-95/11261 wird vorzerkleinerter Zellstoff in eine wässrige Lösung eines tertiären Aminoxids eingebracht, um eine erste Suspension herzustellen. Diese erste Suspension wird anschließend gemahlen und dann unter Wärmezufuhr und vermindertem Druck in eine formbare Celluloselösung überführt. Um den beim Mahlen bzw. Zerkleinern der Cellulose anfallenden Staub in das Verfahren zurückzuführen, sind bei der WO-A-94/28215 Filter eingesetzt, durch die der Cellulosestaub von der Luft getrennt wird. In der WO-A-96/38625 ist eine Anlage beschrieben, die sowohl Zellstoffballen als auch Zellstoff in Blattform zerkleinern kann. Hierzu ist ein Abwurfschacht vorgesehen, der in einer Vorrichtung zum Vorzerkleinern des Zellstoffes mündet.

In der EP-B-0818469 wird vorgeschlagen, Zellstoff in wässrigen Aminoxidlösungen zu dispergieren und die so erhaltene Dispersion mit Xylanasen zu behandeln.

Neben diesen Bemühungen, eine homogene und spinnfähige Celluloselösung wirtschaftlich herzustellen, gibt es auch Versuche, das Problem der unter einer exothermen Reaktion spontan eintretenden Abbauerscheinungen der Celluloselösung zu beherrschen. In Buijtenhuis et al., The Degradation and Stabilisation of Cellulose Dissolved in NMMNO, in: Papier 40 (1986) 12, 615-618 sind Untersuchungsergebnisse beschrieben, wonach Metalle in der Celluloselösung die Zersetzungstemperaturen des NMMNO herabzusetzen scheinen. Vor allem Eisen und Kupfer scheinen die Zersetzung von NMMNO zu beschleunigen. Andere Metalle, wie z.B. Nickel oder Chrom, üben in entsprechendem Vorkommen und entsprechender Konzentration ebenfalls einen negativen Einfluss auf die Zersetzungseigenschaften der Celluloselösung auf, wenn sie in entsprechenden Konzentrationen vorkommen. Dennoch wird in der WO-A-94/2821 0 noch Edelstahl als Werkstoff für einen Spinnkopf verwendet, um den hohen Drücken während der Extrusion der Celluloselösung standzuhalten.

In der DE-T-699 13 117 wird ein anderer Weg beschritten, um bei der Herstellung von Lyocell-Fasern stabile Celluloselösungen zu erhalten. Das Verfahren dieser Druckschrift greift nicht bei der Celluloseverarbeitung nach dem Lyocell-Verfahren, sondern bei der Herstellung von Zellstoffen für das Lyocell-Verfahren ein. Gemäß dem Verfahren dieser Druckschrift wird der Gehalt an Metallionen reduziert, um Cellulosen mit einem geringen Anteil an Übergangsmetallen, insbesondere mit geringem Eisen- und Kupferanteil zu erhalten. Solche Cellulosen sind zwar besonders für Zellstofflösungen, wie sie Grundlage des Lyocell-Verfahrens sind, geeignet, weil sie das Risiko einer Zersetzung von NMMNO der Spinnmasse bei der Zellstoffverarbeitung und -verspinnung im Lyocell-Verfahren senken. Jedoch ist beim Verfahren der DE-T-699 13 117 nach wie vor problematisch, dass andere als die dort beschriebenen Zellstoffe trotzdem zu einer Destabilisierung der Celluloselösung und/oder Cellulosesuspension bei der Faserherstellung führen, ein sicheres Lyocell-Verfahren ohne Destabilisierung der Celluloselösung, also nur bei ausschließlicher Verwendung der Zellstoffe der DE-T-699 13 117 gewährleistet werden kann.

Hinzu kommt, dass bei der Zellstoffverarbeitung das System NMMNO-Cellulose-Wasser im hochkonzentrierten NMMNO-Bereich die Eigenschaft besitzt, Metallionen aus den Prozessapparaten, wie den Leitungen, Filtern und Pumpen, herauszulösen, was die Systemstabilität herabsetzt. In der WO-A-96/27035 ist daher ein Verfahren zur Herstellung cellulosischer Formkörper beschrieben, bei dem zumindest ein Teil der mit der Celluloselösung in Kontakt befindlichen Materialien bis zu einer Tiefe von zumindest 0,5 µm zu zumindest 90% aus einem Element aus der Gruppe von Titan, Zirkonium, Chrom und Nickel enthalten soll. Wesentlich ist gemäß der Lehre der WO-A-96/27035, dass die restliche Zusammensetzung der Apparate und Rohrleitungen, insoweit sie in Kontakt mit der Celluloselösung kommen, kein Kupfer, Molybdän, Wolfram oder Kobalt enthalten. Durch diese Maßnahme sollen gemäß der Lehre der WO-A-96/27035 exotherme Abbaureaktionen vermieden werden.

In der DE-C-198 37 210 schließlich, von der als nächstkommenden Stand der Technik ausgegangen wird, wird unabhängig vom Wassergehalt der eingesetzten Cellulose eine homogene Celluloselösung hergestellt. Hierzu wird die Cellulose, im Unterschied zur gängigen Methode, zunächst in Abwesenheit von NMMNO unter Homogenisierung in einem Pulper durch eine erste Scherzone gefördert und erst anschließend in einem minderwasserhaltiges NMMNO zugegeben.

Ein anderer Weg der Herstellung der Celluloselösung wird in der DE-A-44 39 149 beschritten, die den nächstkommenden Stand der Technik bildet. Gemäß dem Verfahren der DE-A-44 39 149 wird die Cellulose enzymatisch vorbehandelt. Um die Wirksamkeit der enzymatischen Vorbehandlung zu steigern, kann die Cellulose vor der Vorbehandlung unter Scherung in Wasser aufgeschlagen werden. Anschließend wird die vorbehandelte Cellulose von der Flotte abgetrennt und die abgetrennte Cellulose in eine Schmelze aus NMMNO und Wasser eingetragen. Dabei kann zweckmäßigerweise die abgetrennte Flotte nach Ergänzung der Wasser- und Enzymverluste zur Vorbehandlung zurückgeführt werden. Allerdings hat sich in der Praxis diese Art der Verfahrensführung als unzweckmäßig erwiesen, da die auf diesem Wege erhaltene Celluloselösung instabil ist.

Trotz all dieser verschiedenartigen Lösungsansätze, eine homogene und stabile Celluloselösung zu erhalten und diese unter Vermeidung exothermen Abbaureaktionen bis hin zu den Extrusionsöffnungen zu fördern, bleibt demnach die umweltfreundliche und wirtschaftliche Herstellung einer homogenen Celluloselösung und deren Stabilität problematisch.

Der Erfindung liegt daher die Aufgabe zugrunde, die bekannten Verfahren und Vorrichtungen der Lyoc-ell-Technobgle so zu verbessern, dass bei höchster Umweltverträglichkeit das Verfahren unabhängig von der Art der verwendeten Cellulose stabil und mit gleichbleibender Qualität durchgeführt werden kann.

Diese Aufgabe wird für das eingangs genannte Verfahren dadurch gelöst, dass der Gehalt von wenigstens einer Art von destabilisierenden Metallionen, die zu einer destabilen Cellulosesuspension und/oder Celluloselösung mit der Gefahr einer exothermen Reaktion führen, in der Cellulosesuspension und/oder der Celluloselösung überwacht und unter einen Stabilitätsgrenzwert eingestellt wird.

Für die eingangs genannte Vorrichtung wird diese Aufgabe erfindungsgemäß dadurch gelöst, dass ein Sensor, durch den der Gehalt von wenigstens einer Art von destabilisierenden Metallionen, die zu einer destabilen Cellulosesuspension und/oder Celluloselösung mit der Gefahr einer exothermen Reaktion führen, in der Cellulose, der Cellutosesuspension und/oder der Celluloselösung erfassbar und ein für den Gehalt der wenigstens Art von destabilislerenden Metal-Monen repräsentatives Steuersignal ausgebbar, ist und eine Steuereinrichtung vorgesehen sind, durch weiche der Metallionen-Gehalt in der Cellulosesuspension und/oder der Celluloselösung in Abhängigkeit vom Steuersignal unter einen Stabilitätsgrenzwert einstellbar ist.

Die erfindungsgemäße Lösung ist einfach und ermöglicht es, bei der zellstoffverarbeitenden Herstellung von Lyocell-Fasern beliebige Arten von Zellstoffen bzw. Cellulose für die Spinnmasse zu verwenden, unabhängig von ihren Gehalten an die Cellulosesuspension und/oder Celluloselösung destabilisierenden Metallionen, so dass es nicht mehr nötig ist, die Cellulose vor ihrer Verarbeitung sorgfältig nach ihrem Gehalt an destabilisierenden Metallionen, insbesondere Eisen (Fe³⁺) und Kupferionen (Cu²⁺), auszuwählen oder mehrere Arten von Cellulose zu mischen. Die erfindungsgemäße Herstellung von Lyocell-Fasern beseitigt das Problem der Zellstoffverarbeitung, nur bestimmte, speziell für den Lyocell-Prozess geeignete und entsprechend teuere Cellulosezusammensetzungen einzusetzen, wie beispielsweise gemäß dem Verfahren der DE-T-699 13 117 hergestellte Cellulosen. Es können vielmehr beliebige Cellulosen im Zuge des Lyocell-Verfahrens verwendet werden, insbesondere auch Cellulosen mit einem hohen bis sehr hohen Gehalt an destabilisierenden Metallionen, die bislang nicht oder nur mit aufwändigen Zusatzmaßnahmen verarbeitet werden konnten, weil sie zu einer instabilen Cellulosesuspension und/oder Celluloselösung mit der Gefahr einer exothermen Reaktion geführt haben. Die Hauptquelle für die die Cellulosesuspension und/oder die Celluloselösung destabilisierenden Metallionen scheint die Cellulose selbst zu sein.

Das erfindungsgemäße Verfahren und die erfindungsgemäße Vorrichtung sind sowohl bei Lyocell-Verfahren anwendbar, bei welchen die Cellulose mit einer wässrigen Lösung eines tertiären Aminoxids oder einem tertiären Aminoxid direkt verpulpt und daraus eine Celluloselösung hergestellt wird, als auch bei Verfahren, bei denen zunächst eine Cellulosesuspension enthaltend im Wesentlichen Wasser und Cellulose erzeugt und erst anschließend zur Bildung einer Celluloselösung ein tertiäres Aminoxid oder eine wässrige Lösung davon zugegeben wird.

Der Stabilitätsgrenzwert für den Metallionen-Gehalt bestimmt sich in Abhängigkeit von der Zusammensetzung der Cellulosesuspension und/oder Celluloselösung, deren Temperatur und deren Verweildauer in der Anlage von der Verpulpung bis zur Extrusion der Lyocell-Faser. Jede Art von Metallionen kann unterschiedlich hohe Stabilitätsgrenzwerte aufweisen. Je weniger eine bestimmte Art von Metallionen die Cellulosesuspension und/oder Celluloselösung destabilisiert, umso höher kann der Stabilitätsgrenzwert sein. So kann der Stabilitätsgrenzwert beispielsweise für Kupferionen aufgrund ihrer stärker destabilisierenden Wirkung unter dem Stabilitätsgrenzwert für Eisenionen liegen. Der Stabilitätsgrenzwert kann experimentell festgestellt werden, indem an Proben von Celluloselösungen mit unterschiedlichem Metallionen-Gehalt, unterschiedlicher Temperatur und unterschiedlichen Standzeiten untersucht wird, bei wie viel Prozent der Proben exotherme Reaktionen auftreten. Diese Prozentzahl dient dann als Wahrscheinlichkeitswert für das Auftreten einer exothermen Reaktion. Der Stabilitätsgrenzwert kann anhand eines für den Betrieb der Anlage realistischen Wahrscheinlichkeitswertes für eine exotherme Reaktion festgelegt werden. Beispielsweise kann ein solcher Wahrscheinlichkeitswert unterhalb 0,01 % oder unterhalb 1 x 10⁻⁶ % liegen, so dass bei dem eingestellten Stabilitätsgrenzwert lediglich mit einer Wahrscheinlichkeit von 0,01 % bzw. 1 x 10⁻⁶ % mit einer exothermen Reaktion zu rechnen ist.

Das erfindungsgemäße Verfahren und die erfindungsgemäße Vorrichtung können in einer Reihe von vorteilhaften, beliebig miteinander kombinierbaren und jeweils für sich vorteilhaften Ausgestaltungen weiter verbessert werden.

So kann in einer besonders vorteilhaften Ausgestaltung die Menge des der Cellulose, der Cellulosesuspension und/oder der Celluloselösung beigemengten Behandlungsmediums in Abhängigkeit vom Gehalt der wenigstens einen Art von Metallionen eingestellt werden. Auf diese Weise wird der von der Cellulose eingebrachte Gehalt der wenigstens einen Art von Metallionen in der Cellulosesuspension und/oder Celluloselösung unter den Stabilitätsgrenzwert gedrückt. Eine besonders hohe Umweltverträglichkeit und Wirtschaftlichkeit des Verfahrens kann dadurch erreicht werden, dass in einer Weiterbildung das beigemengte Behandlungsmedium aus einem nachfolgenden Verfahrensschritt des Lyocell-Verfahrens wiedergewonnen wird.

Beispielsweise kann das einer Cellulosesuspension im Zuge der Vorbehandlung der Cellulose beigemengte Wasser als Presswasser aus dem Abpressvorgang der Cellulosesuspension zurückgeführt und beim Pulpen der Cellulose wiederverwendet werden. Dieses Presswasser kann in weiteren Ausgestaltungen vor der Beimengung zur Cellulose gereinigt und insbesondere von Metallionen wenigstens zum Teil befreit werden.

Beim direkten Verpulpen der Cellulose in Aminoxid oder bei der Beimengung von Aminoxid zur abgepressten Cellulosesuspension kann wiedergewonnenes Aminoxid verwendet werden, das beispielsweise aus einem Spinnbad regeneriert werden kann, durch welches die frisch extrudierten Spinnfäden geleitet werden und in dem die Cellulose ausfällt. Auch das rückgeführte tertiäre Aminoxid kann vor der Beimengung zur Cellulose, Cellulosesuspension und/oder Celluloselösung gereinigt und insbesondere von den darin enthaltenen Metallionen wenigstens zum Teil befreit werden. Zum Entfernen der Metallionen kann ein handelsüblicher lonentauscher eingesetzt werden.

Eine besonders einfach durchzuführende Absenkung des Gehalts von destabilisierenden Metallionen unter den Stabilitätsgrenzwert ergibt sich, wenn in dem Schritt, in dem das wiedergewonnene Behandlungsmedium der Cellulose, der Cellulosesuspension und/oder der Celluloselösung beigemengt wird, ein gleichartiges, frisches, nicht wiedergewonnenes Behandlungsmedium beigemengt wird. Beispielsweise kann dem rückgeführten Presswasser Frischwasser, insbesondere vollentsalztes oder teilentsalztes Frischwasser, und/oder dem wiedergewonnenen tertiären Aminoxid frisches tertiäres Aminoxid zugeführt werden. Da in dem frischen Behandlungsmedium weniger destabilisierende Metallionen gelöst sind, steigt aufgrund der Vermischung in der Cellulose, der Cellulosesuspension und/oder der Celluloselösung der Gehalt an destabilisierenden Metallionen trotz der Rückführung des Behandlungsmediums nicht zu stark, insbesondere nicht über den Stabilitätsgrenzwert, an. Außerdem können durch diese Vorgehensweise Verluste von Behandlungsmedium, die in erster Linie durch den Verbleib des Behandlungsmediums in den Spinnfäden herrühren, vermieden werden.

Wenn gemäß einer weiteren Ausgestaltung ein Teil des Behandlungsmediums aus dern Herstellprozess ausgeschleust wird und damit für eine Rückführung innerhalb des Prozesses nicht mehr zur Verfügung steht, so werden mit dem ausgeschleusten Behandlungsmedium auch destabilisierende Metallionen dem Prozess entzogen. Über die Menge des ausgeschleusten und daher nicht mehr in den Prozess rückgeführten Behandlungsmediums lässt sich somit ebenfalls der Gehalt der destabilisierenden Metallionen in der Cellulosesuspension und/oder Celluloselösung steuern. Das ausgeschleuste Behandlungsmedium wird vorzugsweise durch frisches Behandlungsmedium ersetzt. Die Menge des ausgeschleusten Behandlungsmediums hängt vorzugsweise vom Gehalt an destabilisierenden Metallionen in Cellulose, Cellulosesuspension und/oder Celluloselösung ab, damit so viel Behandlungsmedium wie möglich wiedergewonnen werden kann.

Der Metallionen-Gehalt kann besonders wirksam gesteuert werden, wenn die jeweiligen Anteile von wiedergewonnenem und frischem Behandlungsmedium in Abhängigkeit vom Gehalt der wenigstens einen Art von Metallionen eingestellt werden. Steigt beispielsweise der Gehalt der Metallionen an, so wird der Anteil des wiedergewonnen und rückgeführten Behandlungsmediums und damit die Einschleusung von Metallionen in die Cellulosesuspension und/oder die Celluloselösung verringert. Sinkt der Metallionen-Gehalt, so kann der Anteil des rückgeführten Behandlungsmediums gegenüber dem Anteil des frischen Behandlungsmediums erhöht werden.

Die Metallionen können durch Inline-Sensoren, d. h. Sensoren, die in dem von der Cellulosesuspension und/oder Celluloselösung während der Lyocell-Herstellung durchströmten Anlagevolumen angeordnet sind, und/oder nach einer manuellen Probeannahme in einem Laboranalyseautomaten bestimmt werden. In ersterem Fall kann das Signal der Sensoren von einer Steuereinrichtung zur automatischen Dosierung des relativen Anteils des rückgewonnenen Behandlungsmediums und des frischen Behandlungsmediums verwendet werden. Eine derartige automatische Dosierung kann beispielsweise durch Aktuatoren betätigte Ventile erfolgen. Bei der manuellen Probeentnahme kann der Metallionen-Gehalt entweder automatisch vom Laboranalyseautomaten an eine Steuereinrichtung weitergegeben oder aber der Gehalt der Metallionen von Hand in ein Eingabegerät folgen.

Zur Erfassung der Metallionen können Massenspektrometer, Geräte zur Atomabsorptionsmessung, Sensoren basierend auf Raman-Scattering und Geräte mit Graphitrohrtechnik eingesetzt werden.

Durch das erfindungsgemäße Verfahren und die erfindungsgemäße Vorrichtung und ihren verschiedenen, voneinander unabhängigen Weiterbildungen ist es nunmehr möglich, beliebige Arten von Cellulose unabhängig von ihrem Gehalt zu verarbeiten. Der Metallionen-Gehalt wird in jedem Fall unter den Stabilitätsgrenzwert eingestellt. Der Stabilitätsgrenzwert beträgt vorzugsweise unter 10 mg/kg für Eisenionen und unter 0,5 mg/kg für Kupferionen.

Im Folgenden wird eine Ausführungsform der Erfindung mit Bezug auf die Zeichnungen beispielhaft beschrieben. Dabei können die Merkmale, wie sie gemäß den obigen Ausführungsformen einzelnen vorteilhaften Ausgestaltungen der Erfindung zuzurechnen sind, beliebig miteinander kombiniert und auch weggelassen werden. Außerdem wird die Erfindung anhand von Versuchsbeispielen dokumentiert.

Es zeigen: .
- Fig. 1: eine Ausführungsform einer erfindungsgemäßen Vorrichtung zur Herstellung einer Celluloselösung in einer schematischen Darstellung, wobei durch die Ausführungsform das erfindungsgemäße Verfahren ausführbar ist;
- Fig. 2: eine schematische Darstellung der Verfahrensschritte zur Herstellung der Cellulosesuspension;
- Fig. 3: eine schematische Darstellung des Verlaufs der Menge der ausgebrachten Eisenionen über die Zeit;
- Fig. 4: eine schematische Darstellung des chemischen Sauerstoffbedarfs im Presswasser über die Zeit;
- Fig. 5: eine schematische Darstellung eines ersten Verfahrens zur Steuerung des Metallionen-Gehaltes.

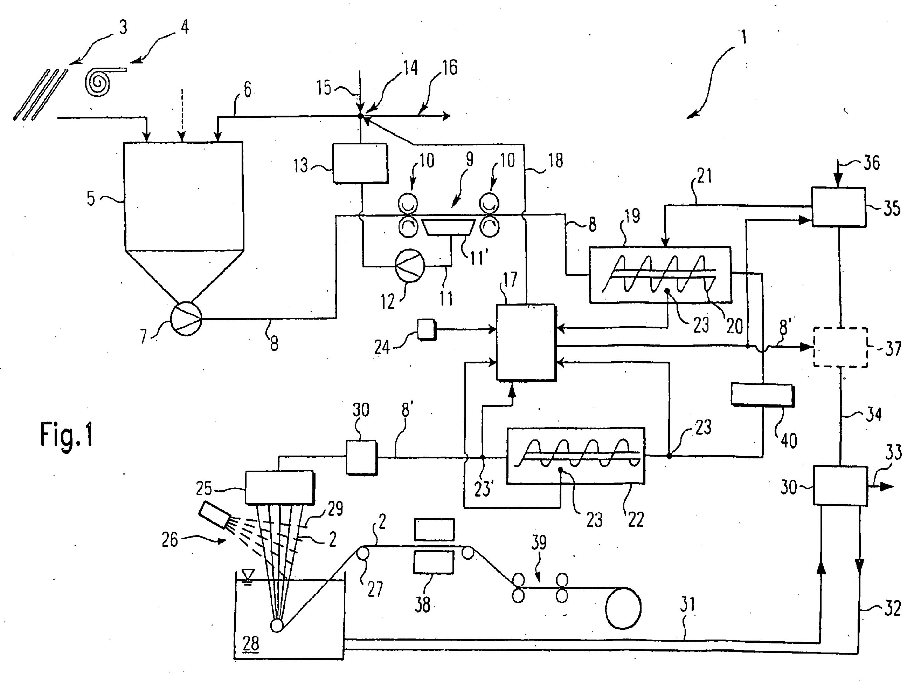

Fig. 1 zeigt eine Anlage 1 zur Herstellung von Endlosformkörpern 2, beispielsweise Spinnfäden, aus einer spinnbaren Celluloselösung enthaltend Wasser, Cellulose und tertiäres Aminoxid.

Zunächst wird Cellulose in Form von Blättern bzw. Platten 3 und/oder Rollen 4 einem Pulper 5 batchweise zugeführt. Im Pulper 5 wird die Cellulose 3, 4 mit Wasser als Behandlungsmedium, symbolisch dargestellt durch den Pfeil 6, aufgeschlagen und eine Cellulosesuspension, vorzugsweise noch ohne Lösungsmittel bzw. Aminoxid, gebildet. Zur Homogenisierung und Stabilisierung der Cellulosesuspension können Enzyme oder Enzymlösungen zugesetzt werden.

Die Menge des zugeschlagenen Wassers 6 wird in Abhängigkeit vom Wassergehalt der Cellulose bestimmt. Typischerweise beträgt der Wassergehalt der eingesetzten Cellulose zwischen 5 und 15 Masseprozent. Diese Schwankungsbreite wird durch entsprechende Änderung der Zugabe von Wasser ausgeglichen, so dass der Wassergehalt der Cellulosesuspension bzw. das Flottenverhältnis Feststoff/Flüssigkeit in etwa konstant bleibt bzw. einen frei gewählten Wert erreicht.

Aus dem Pulper 5 wird die Cellulosesuspension durch eine Dickstoffpumpe 7 über ein Leitungssystem 8 zu einer Presseinrichtung 9 geleitet, wobei die Cellulosesuspension aus Wasser und Cellulose bevorzugt bei einem Temperaturbereich von 60 bis 100°C gehalten wird.

In der Presseinrichtung wird die vom Pulper 5 erzeugte Cellulosesuspension beispielsweise durch rotierende Walzen 10 abgepresst. Das abgepresste Wasser bzw. Presswasser 11 wird durch ein Auffangorgan 11' aufgefangen und durch ein Fördermittel 12, durch eine optionale Filtereinrichtung 13 und durch eine Mischeinrichtung 14 zumindest zum Teil als Wasser 6 wieder dem Pulper 5 als Behandlungsmedium zurückgeführt. Die Presseinrichtung 9 kann auch mit einer Absaugeinrichtung (nicht gezeigt) versehen sein, mit der überschüssiges Wasser aus der Cellulosesuspension abgesaugt wird. Das abgesaugte Wasser wird bei dieser Ausgestaltung wie das Presswasser zumindest zum Teil wieder zum Pulper 5 zurückgeführt. Im Sinne der Erfindung ist auch ein abgesaugtes oder auf einem anderen Wege aus der Cellulosesuspension entferntes Wasser ein Presswasser, das zum Aufschlagen der Cellulose wiederverwendet werden kann.

Der Filter 13 kann einen oder mehrere Oberflächenfilter, Tiefenfilter, Membranfilter, Plattenfilter, Spaltfilter, Separatoren, Zentrifugen, Hydrozyklone, Bandfilter und Vakuumbandfilter, Kerzenfilter, Filterpressen, Rotationsfilter, Rückspülfilter und Mehrschichtfilterumfassen. Außerdem kann im Filter 13 das Presswasser 11 osmotisch behandelt warden; alternativ oder zusätzlich können Metallionen sowie Teilchen aus dem Presswasser 11 herausgefiltert werden bzw. metallbindende Zusätze dem Presswasser 11 zugeführt werden.

Über die Mischeinrichtung 14 werden die jeweiligen Anteile des rückgeführten Behandlungsmediums 11 und des aus einer weiteren Frischquelle zugeführten frischen Behandlungsmediums 15, beispielsweise Frischwasser, in dem dem Pulper 5 zugeführten Wassers eingestellt. Außerdem wird durch die Mischeinrichtung 14 der Anteil des Behandlungsmediums 11 eingestellt, der durch eine Abwasserleitung 16 aus der Anlage 1 geleitet bzw. ausgeschleust wird.

Die Mischeinrichtung 14 kann beispielsweise ein Mehrwegventil oder mehrere Ventile umfassen. Die Mischeinrichtung 14 wird durch eine Steuereinrichtung 17 gesteuert, so dass auf ein Ausgangssignal der Steuereinrichtung über wenigstens eine Steuerleitung 18 die Anteile des Presswassers 11 und des Frischwassers 15 in dem dem Pulper 5 zugeführten Wasser 6 auf variabel vorgebbare Werte eingestellt werden können.

Nach dem Abpressen wird die Cellulosesuspension weiter durch das Leitungssystem 8 in ein Rühr- oder Fördermittel 19 transportiert, in dem über ein Rühr- oder Förderwerkzeug 20, wie Schnecken, Paddel oder Schaufeln, eine auf die Cellulosesuspension wirkende Scherspannung erzeugt wird. Für das Rühr- und Fördermittel 19 können keine Ringschichtmischer eingesetzt werden, wie sie beispielsweise von der Fa. DRAIS Misch- und Reaktionssysteme stammen und unter der Bezeichnung CoriMix® vertrieben werden. Die Ringschichtmischer dienen nämlich lediglich der Befeuchtung bzw. Imprägnierung von trockenen cellulosischen Materialien, die im hier beschriebenen Prozess nicht eingesetzt werden.

Im Bereich der Scherspannungen des Rühr- und Fördermittels 19, in der sogenannten Scherzone, wird über eine Leitung 21 ein Behandlungsmedium wie tertiäres Aminoxid, insbesondere N-Methylmorpholin-N-oxid, in wässriger Form der Cellulosesuspension mit einem Molverhältnis NMMNO/H₂O zwischen 1:1 und 1:2,5 als Lösungsmittel für die Cellulose zugeführt. Außerdem können in der Scherzone Zusatzstoffe wie Stabilisatoren und Enzyme, organische Additive, Mattierungsstoffe, Alkalien, feste oder flüssige Erdalkalien, Zeolithe, feinpulverisierte Metalle wie z.B. Zink, Silber, Gold, Platin zur Herstellung von antimikrobiellen und/oder elektro- bzw. wärmeleitfähigen Fasern während und nach dem Spinnprozess, und/oder Farbstoffe der Cellulosesuspension beigemengt werden. Die Konzentration der Zusatzstoffe kann im Bereich von 100 bis 100.000 ppm bezogen auf das Faserprodukt gesteuert werden.

Die Konzentration des zugeführten NMMNO hängt von der Wasserhaltigkeit der sich gerade in der Cellulosesuspension befindlichen Cellulose 3, 4 ab. Das Rühr- oder Fördermittel 19 wirkt als ein Mischer, in dem das tertiäre Aminoxid mit der Cellulosesuspension vermischt und die Celluloselösung hergestellt wird. Anschließend wird die mit NMMNO versetzte Celluloselösung über das Leitungssystem 8 zu einem zweiten Rühr-bzw. Fördermittel 22 gefördert. Im Rühr- bzw. Fördermittel 22 kann eine Verdampfungsstufe umfasst sein. Ab dem Rühr- bzw. Fördermittel 22 kann das Leitungssystem beheizt sein. Das beheizte Leitungssystem ist in Fig. 1 im Gegensatz zu dem unbeheizten Leitungssystem 8 mit dem Bezugszeichen 8' versehen. Insbesondere kann ein Leitungssystem verwendet werden, wie es in der WO 01/88232 A1, der WO 01/88419 A1 und der WO 03/69200 A1 beschrieben ist.

Nach der Zugabe des tertiären Aminoxids wird in der Leitung 8' und/oder in wenigstens einer der Scherzonen 19, 22, oder vor und/oder nach einer der Scherzonen, der Metallionengehalt der Celluloselösung, insbesondere von Kupfer- und Eisenionen, über Sensoren 23, 23' gemessen und ein für den Metallgehalt oder den Gehalt an einzelnen destabilisierenden Metallionen, wie Eisen-, Chrom-, Kupfer- und/oder Molybdänionen, repräsentatives Signal an die Steuereinrichtung 17 ausgegeben. Der Metallionen-Gehalt kann in einer weiteren Ausgestaltung alternativ oder zusätzlich zu einer automatischen inline-Probenentnahme auf nasschemischem Wege nach einer manuellen Probenentnahme in einem Laboranalyseautomaten bestimmt und von dort automatisch oder manuell an die Steuereinrichtung 17 weitergegeben werden. Allerdings ist bei einer manuellen Probenentnahme gegenüber der automatischen inline-Probenentnahme direkt aus dem Leitungssystem 8, 8' nachteilig, dass die Rückkopplung zur Steuerung des Metallionen-Gehalts einen manuellen Verfahrensschritt beinhaltet und damit nicht automatisiert werden kann.

Die Steuereinrichtung 17 vergleicht den von den Sensoren 23, 23' gemessenen Metallionen-Gehalt mit vorbestimmten Grenzwerten und gibt in Abhängigkeit von diesem Metallionen-Gehalt ein Signal an die Mischeinrichtung 14 aus. Durch das Steuerungssignal an die Mischeinrichtung 14 wird in Abhängigkeit vom Gehalt der destabilisierenden Metallionen der Celluloselösung die Zusammensetzung des an den Pulper 5 geführten Wassers 6 als Behandlungsmedium eingestellt und der Metallgehalt bzw. der Gehalt an einzelnen Metallionen in der mit tertiärem Aminoxid versetzten Celluloselösung auf einen vorbestimmten Wert geregelt. Da sich die Konzentration an Reaktionen in der Celluloselösung nach der Verdampfungsstufe erhöht, ist bevorzugt ein Sensor vorgesehen, der den Metallgehalt der Celluloselösung nach Zugabe aller Bestandteile und nach sämtlichen Verdampfungsstufen überwacht.

Ist beispielsweise der Gehalt der Celluloselösung an destabilisierenden Metallionen, wie er durch die Sensoren 23, 23' oder auf nasschemischem Wege erfasst wird, zu hoch, so wird der Anteil von Frischwasser in dem dem Pulper 5 zugeführten Wasser 6 erhöht. Der Metallgehalt wird dabei durch die Steuereinrichtung 17 so eingestellt, dass er unterhalb eines Stabilitätsgrenzwertes von 10 mg/kg bleibt. Der Metallgehalt kann auch vor der Bildung der Celluloselösung, also noch in der Cellulosesuspension, festgestellt werden, wobei diese Messung angemessener ist als die Messung des Metallgehalts direkt in der Celluloselösung.

Als Sensoren 23, 23' können Geräte zur Atomabsorptionsmessung, Massenspektrometer, optische Detektoren zur Erfassung von Fluoreszensspektren, Emissionspektren oder von Raman-Streuung verwendet werden. Derartige Sensoren sind bekannt und werden von diversen Herstellern, beispielsweise von Perkin Eimer hergestellt.

Die Steuereinrichtung 17 berücksichtigt bei der Steuerung der Zusammensetzung des Wassers 6 den im Vorab bestimmten Metallgehalt der dem Pulper 5 zugeführten Cellulose 3, 4. Hierzu kann über ein Eingabegerät 24 der analysierte Metallgehalt der gerade verwendeten Cellulose 3, 4 an einzelnen Metallionen oder der Gesamtgehalt an Metall der Steuereinrichtung 17 eingegeben werden. Diese Voreinstellung wird bei der Bestimmung der Anteile des Presswassers und des Frischwassers in dem dem Pulper 5 zugeführten Wasser berücksichtigt. Beispielsweise wird bei Cellulosen mit hohem Metallgehalt von Vornherein ein höherer Anteil von Frischwasser 15 dem Pulper 5 zugeführt oder es werden bestimmte metallbindende Zusätze der Cellulosesuspension beigemischt.

Sinkt der Metallgehalt, wie er von den Sensoren 23, 23' in der mit tertiären Aminoxid versetzten Celluloselösung erfasst wird, unter einen vorbestimmten Grenzwert, der als ausreichend für die Sicherheit gegen exotherme Reaktionen betrachtet wird, beispielsweise 10 mg/kg, so wird der Anteil des Presswassers in dem dem Pulper 5 zugeführten. Wasser erhöht. Dadurch wird bei ausreichender Sicherheit gegen exotherme Reaktionen weniger Frischwasser verbraucht und weniger Presswasser an die Umwelt abgegeben.

Nach dem Rühr- bzw. Fördermittel 22 wird die nunmehr extrudierbare Celluloselösung zu einem Extrusionskopf 25 geleitet, der mit einer Vielzahl von Extrusionsöffnungen (nicht gezeigt) versehen ist. Durch jede dieser Extrusionsöffnungen wird die hochviskose Celluloselösung zu jeweils einem Endlosformkörper 2 in einen Luftspalt 26 extrudiert. Eine Orientierung der Cellulosemoleküle findet durch eine Verstreckung der nach der. Extrusion noch viskosen Celluloselösung statt. Hierzu wird die extrudierte Celluloselösung über ein Abzugswerk 27 mit einer Geschwindigkeit von den Extrusionsöffnungen weggezogen, die größer als die Extrusionsgeschwindigkeit ist.

Nach dem Luftspalt 26 durchqueren die Endlosformkörper 2 ein Fällbad 28 enthaltend ein Nichtlösungsmittel wie Wasser, wodurch die Cellulose in den Endlosformkörpern 2 ausgefällt wird. Im Luftspalt 26 werden die Endlosformkörper 2 durch einen Kühlgasstrom 29 gekühlt. Hierbei hat sich entgegen der in der WO 93/19230 A1 bzw. EP 584 318 B1 vertretenen Theorie als wesentlich vorteilhafter herausgestellt, wenn der Kühlgasstrom nicht unmittelbar nach dem Austritt der Endlosformkörper 2 aus der Düse, sondern erst in einem Abstand von der Düse auf die Endlosformkörper 2 auftritt. Um optimale Fasereigenschaften zu erzielen, sollte der Kühlgasstrom turbulent sein und eine Geschwindigkeitskomponente in Extrusionsrichtung aufweisen, wie dies in der WO 03/57951 A1 und in der WO 03/57952 A1 beschrieben ist.

Das Fällbad 28 reichert sich zunehmend mit tertiärem Aminoxid an, so dass es mittels einer Wiedergewinnungseinrichtung 30 laufend regeneriert werden muss. Hierzu wird der Wiedergewinnungseinrichtung 30 über eine Leitung 31, die beispielsweise mit einem Überlauf des Fällbades verbunden ist, im Betrieb die Flüssigkeit aus dem Fällbad zugeführt. Die Wiedergewinnungseinrichtung 30. entzieht der Flüssigkeit das tertiäre Aminoxid und führt über eine Leitung 32 gereinigtes Wasser zurück. Nicht wiederverwendbare Abfallstoffe werden über eine Leitung 33 aus der Vorrichtung 1 ausgeschleust und entsorgt.

In der Wiedergewinnungseinrichtung 30 wird das Aminoxid vom Wasser getrennt und über eine Leitung 34 einer weiteren Mischungseinrichtung 35 zugeführt, welcher über einer Leitung 36 ebenfalls frisches Aminoxid zugeführt ist. Das regenerierte Aminoxid aus der Leitung 34 wird mit dem frischen Aminoxid 36 vermischt und über die Leitung 21 der Scherzone 19 zugeführt.

Über einen Ionentauscher, beispielsweise der Firma Rohm und Haas, Amberlite GT 73, oder Filter 37 können Metallionen aus dem regenerierten Aminoxid entfernt werden.

Die Mischungseinrichtung 35 und die Reinigungseinrichtung 37 können von der Steuereinrichtung 17 in Abhängigkeit von dem von den Sensoren 23, 23' gemessenen Metallionen-Gehalt gesteuert werden.

Anschließend werden die Endlosformkörper weiter behandelt, beispielsweise in einer Vorrichtung 38 gewaschen, aviviert, chemisch behandelt, um die Vemetzungseigenschaften zu beeinflussen, und/oder getrocknet sowie in einer Vorrichtung 39 weiter abgepresst. Die Endlosformkörper können durch eine nicht dargestellte Schneidevorrichtung auch zu Stapelfasern verarbeitet und in Vliesform aus der Vorrichtung 1 geleitet werden.

Die gesamte Förderung der Celluloselösung im Leitungssystem 8' erfolgt kontinuierlich, wobei im Leitungssystem 8' Pufferbehälter 40 vorgesehen sein können, um Schwankungen der Fördermenge und/oder des Förderdruckes aufzufangen und eine kontinuierliche Bearbeitung ohne die Entstehung von Totwassergebieten zu ermöglichen. Das Leitungssystem 8' ist mit einem Heizsystem (nicht gezeigt) ausgestattet, um die Celluloselösung während der Förderung auf einer Temperatur zu halten, in der ohne Zersetzung des tertiären Aminoxids die Viskosität für eine wirtschaftliche Förderung ausreichend niedrig ist. Die Temperatur der Celluloselösung in dem Leitungsbereich 8' beträgt dabei zwischen 75 und 110°C.

Gleichzeitig wird durch die hohe Temperatur die Homogenisierung und gleichmäßige Durchmischung gefördert, die durch statische oder rotierende Mischer erhöht werden kann.

Die Verweilzeit der Cellulosesuspension oder -lösung im Leitungssystem 8, 8' von der Dickstoffpumpe 7 bis zum Extrusionskopf 25 beträgt zwischen 5 Minuten und 2 Stunden, vorzugsweise bei etwa 30 bis 60 Minuten.

Die Durchführung des erfindungsgemäßen Verfahrens wird nun anhand von Versuchsbeispielen beschrieben.

Im Folgenden werden für die Mengenangaben Werte verwendet, die mit der Menge des eingebrachten Zellstoffes normiert wurden.

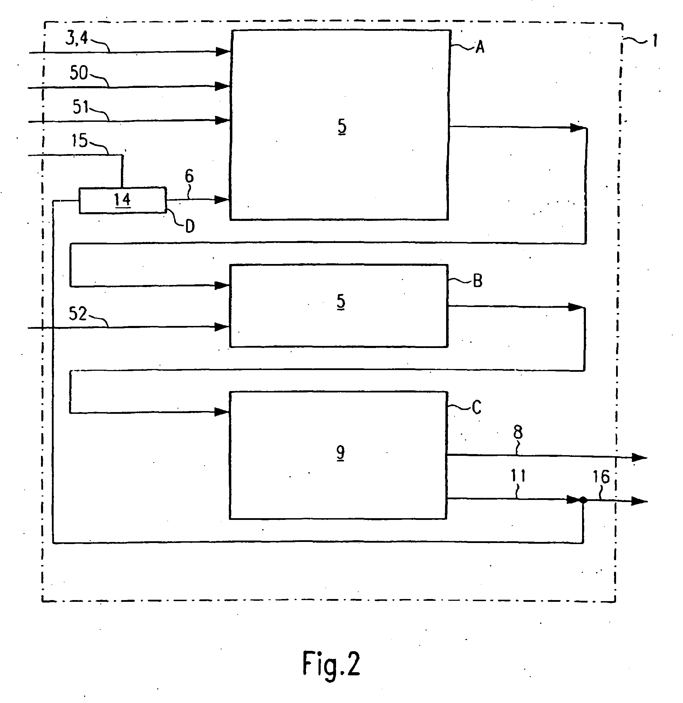

Eine erste Reihe von Versuchen befasst sich mit der Zellstoffvorbehandlung zur Herstellung der Cellulosesuspension und der Untersuchung des Presswassers. Im Folgenden wird dabei auf die schematische Darstellung der Vorbehandlung in Fig. 2 verwiesen, ferner werden die Bezugszeichen der Fig. 1 verwendet.

### Versuchsbeispiel 1

In einem Pulper 5 der Firma Grubbens mit einem Nettofüllvolumen von 2 m³ wurde in einem Verfahrensschritt A Zellstoff 3, 4 (vgl. Fig. 1) vom Typ MoDo Dissolving Wood Pulp Fichtensulfitzellstoff mit Wasser 6 in einem Mischungsverhältnis 1:17 (Feststoffdichte 5,5 %) angesetzt. Der Zellstoff wies ein Cuoxam DP 650 auf und einen α-Cellulosegehalt größer oder kleiner 95 %. Es können die im Handel erhältlichen Cellulosen auf Hardwood- bzw. Softwood-Basis verwendet werden. Hemicellulosegehalte im Zellstoff im Bereich von 2 bis 20 % können ebenso im Prozess verarbeitet werden. Andere mögliche Zellstoffe sind Sappi Eukalyptus, Bacell Eucalyptus, Tembec Ternfilm HW, Alicell VLV und Weyerhäuser α-Cellulose von weniger als 95 %. Das zugeführte Wasser 6 bestand zu 30 Teilen aus vollentsalztem Frischwasser 15 und zu 70 Teilen aus Presswasser.

Unter heftigem Rühren wurde technisch reine Ameisensäure 50 im Verhältnis 1:140 und eine flüssige Enzympräparation 51 im Verhältnis 1:200 jeweils bezogen auf den Cellulosegehalt beigemengt. Für eine Dauer von etwa 35 Minuten wurde dann eine enzymatische Vorbehandlung durchgeführt, bis eine homogene Cellulosesuspension vorlag. Als Enzympräparation 52 kann ein Cellulaseenzymkomplex wie beispielsweise Cellupract ® AL 70 der Firma Biopract GmbH oder Cellusoft der Firma Novo Nordisk verwendet werden.

Anschließend wurde die Vorbehandlung in einem Verfahrensschritt B durch Beigabe von Natronlauge 52 im Verhältnis 1:500 bezogen auf den Cellulosegehalt der Cellulosesuspension im Pulper 5 abgebrochen.

Die Cellulosesuspension wurde dann in einem Verfahrensschritt C in einem als Pressmittel 9 dienenden Vakuumbandfilter mit anschießender Abpressung der Firma Panne-vis auf ca. 50 % entwässert, so dass der abgepresste Zellstoff einen Trockengehalt von ca. 50 % aufwies. Aus Schritt C wurde der abgepresste Zellstoff dann über die Leitung 8 zur Erzeugung einer Celluloselösung enthaltend NMMNO, Wasser und Cellulose weitergeleitet. Diese Schritte sind in Fig. 2 der Einfachheit halber nicht dargestellt.

Das Presswasser wurde im Pressmittel 9 aufgefangen und über die Leitung 11 (vgl. Fig. 1) abgeleitet. Ca. 75 % des Presswassers wurden zurück zum Pulper 5 geleitet, ca. 25 % des Presswassers wurden über die Leitung 16 einer Abwasserreinigung zugeführt.

Der Polymerisationsgrad des Zellstoffes wurde immer so gewählt, dass man in der Spinnlösung einen DP (degree of polymerization) von etwa 450 bis etwa 550 erreichte. In der Spinnlösung wurde die Cellulosekonzentration auf ca. 12 % eingestellt.

Das im System 1 verbleibende Presswasser wurde in einer Mischungseinrichtung 14 (vgl. Fig. 1) in einem Verfahrensschritt D mit dem voll entsalzten Wasser wieder vermischt, wie oben beschrieben ist.

### Versuchsbeispiel 2

In einem weiteren Versuch wurden sämtliche Schritte des Versuchsbeispiels 1 wiederholt. Lediglich im Verfahrensschritt A wurde die Menge der zugesetzte Enzympräparation auf 1:125 bezogen auf den Cellulosegehalt der Cellulosesuspension verringert.

### Versuchsbeispiel 3

In einem weiteren Versuch wurden die Schritte aus den Versuchsbeispielen 1 und 2 wiederholt und lediglich im Verfahrensschritt A keine Enzympräparation mehr zugegeben.

### Ergebnisse der Versuchsbeispiele 1 bis 3

Um die Wirksamkeit des erfindungsgemäßen Verfahrens zu überprüfen, wurde das beim Abpressvorgang aufgefangene Presswasser auf seinen Kupfer- und Eisen-lonengehalt analysiert, außerdem wurde der chemische Sauerstoffbedarf bestimmt.

Als Ergebnis dieses Versuches lässt sich festhalten, dass durch die Kreislaufführung eines Teiles des Presswassers in den ersten Pulpzyklen die erfassten Messwerte der Inhaltsstoffe ansteigen. Da jedoch permanent ein Teil des Presswassers mit den darin gelösten Inhaltsstoffen ausgeschleust wird, stellt sich nach einiger Zeit ein konstanter Zustand ein, in dem der Gehalt der Inhaltsstoffe, insbesondere der Metallionen, gleich bleibt.

Insgesamt wurden bei der Presswasserrückführung ca. 10 % der vom Zellstoff 3, 4 eingebrachten Eisenionen und ca. 40 % der vom Zellstoff eingebrachten Kupferionen entfernt. Im kontinuierlichen Anlagenbetrieb dürfte bei Rückführung des Presswassers der auf die Menge des vom Zellstoff eingetragenen Eisens bezogene prozentuelle Anteil des aus dem System 1 ausgebrachten Eisens zwischen 22 % und 35 % liegen.

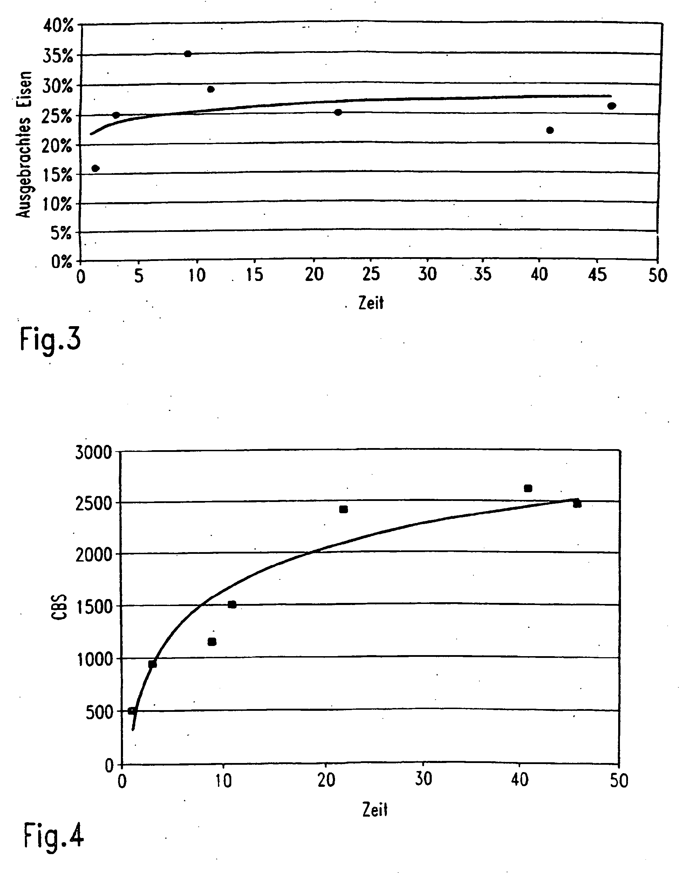

Fig. 3 gibt schematisch den zeitlichen Verlauf der Eisenionenausbringung wieder.

Der stabile Endzustand des Systems 1 wird, wie die Versuchsbeispiele 1 bis 3 zeigen, dabei unabhängig von der Menge der eingebrachten Enzyme bei der Cellulosevorbehandlung erreicht.

Dies wird auch durch die zeitliche Änderung des chemischen Sauerstoffbedarfs (CSB) bestätigt, wie er in Fig. 4 dargestellt ist. Der chemische Sauerstoffbedarf wurde nach DIN 38409 im Presswasser bestimmt und nähert sich mit zunehmender Dauer der Presswasserrückführung einem konstanten Wert.an.

Des Weiteren wurde in den gemäß den Versuchsbeispielen 1 bis 3 erhaltenen Celluloselösungen der Polymerisationsgrad und daraus der DP-Abbau sowie die Onset-Temperatur der Spinnlösung als Indikator für deren Stabilität bestimmt. Die Ergebnisse für die Versuchsbeispiele sind in der Tabelle 1 dargestellt.

**Tabelle 1**

| Versuchsbeispiel | DP-Abbau [%] | Tₒₙₛₑₜ °C |
|---|---|---|
| 1 | 27,5 | 165 |
| 2 | 27 | 165 |
| 3 | 9 | 160 |

Wie sich aus Tabelle 1 ergibt, ist die durch Presswasserrückführung erhaltene Celluloselösung stabil und weist eine Onset-Temperatur von wenigstens 160° C auf. Nach Versuchen wird bei dieser Vorgehensweise nämlich eine Onset-Temperatur von höchstens 147° C erreicht. Die Onset-Temperatur nach Tabelle 1 gemäß dem erfindungsgemäßen Verfahren mit Presswasserrückführung liegt auch oberhalb der Onset-Temperatur, wie sie bei dem Verfahren der WO 95/08010 erzielt wird und die in der Praxis um 150° C liegt.

Anhand dieser Untersuchungen zeigt sich, dass trotz der Presswasserrückführung die Onset-Temperaturen noch über den Onset-Temperaturen der Trockenverarbeitung von Cellulose liegen und durch eine enzymatische Vorbehandlung der Cellulose gesteigert werden können. Damit ist die Presswasserrückführung für den industriellen Einsatz geeignet.

In einer weiteren Versuchsreihe wurde die Auswirkung der im Presswasser enthaltenen Stoffe auf die Stabilität der Celluloselösung untersucht. Hierzu wurde bei den Versuchsbeispielen 1 und 3 jeweils ein Konzentrat aus 5 1 Presswasser im Verhältnis 1:270 der Celluloselösung beigemengt und auf eine Presswasserrückführung verzichtet.

In beiden Fällen, einmal gemäß der Vorgehensweise von Versuchsbeispiel 1 ohne enzymatische Vorbehandlung und einmal gemäß der Vorgehensweise von Versuchsbeispiel 3 mit enzymatischer Vorbehandlung ergibt sich durch das Presswasserkonzentrat jeweils ein Absinken der Onset-Temperatur auf ca. 141 ° C. Somit ist nachzuweisen, dass das Presswasser grundsätzlich die Stabilität der Celluloselösung herabsenkt.

Diese Destabilisierung der Celluloselösung lässt sich jedoch durch die Ausschleusung des mit destabilisierenden Metallionen Behandlungsmediums vermeiden. Der Anteil des rückgeführten Behandlungsmediums hängt von der Art der verwendeten Cellulose ab, wie die folgende Tabelle zeigt.

Der Eisen- und Kupfergehalt sowie der Metallionen-Gehalt der Cellulose insgesamt variiert bei den verschiedenen Arten von Cellulose beträchtlich, wie aus der Tabelle 2 hervorgeht. Der Metallgehalt der verschiedenen Cellulosearten wurde durch Veraschen im Platintiegel nach DIN EN ISO 11885 (E22) sowie mit der Flammen-AAS bestimmt.

**Tabelle 2**

| **Zellstoffeinsatz** | | | | | | | | |
|---|---|---|---|---|---|---|---|---|
| Inhaltsstoffe Zellstoff | Zellstoff 1 mg/kg | Zellstoff 2 mg/kg | Zellstoff 3 mg/kg | Zellstoff 4 mg/kg | Zellstoff 5 mg/kg | Zellstoff 6 mg/kg | Zellstoff 7 mg/kg | Zellstoff 8 mg/kg |
| Fe | 1,3 | 2,0 | 1,6 | 5,8 | 2,2 | 2,6 | 14 | 13 |
| Mn | < 0,3 | < 0,1 | 0,2 | 0,33 | k.A. | < 0,3 | 0,4 | < 0,3 |
| Mg | 2 | 2 | 226 | 32 | 138 | 2 | 21 | 7,8 |
| Co | 0,3 | < 0,3 | < 0,3 | < 0,3 | < 0,3 | < 03, | < 0,3 | < 0,3 |
| Ca | 54 | 4 | 37 | 64 | 30 | 6 | 130 | 27 |
| Cr | < 0,3 | < 0,3 | 1,4 | < 0,3 | < 0,3 | 0,4 | < 0,3 | < 0,3 |
| Mo | < 0,3 | < 0,1 | < 0,1 | < 0,1 | < 0,3 | < 0,3 | < 0,3 | < 0,3 |
| Ni | < 0,3 | < 0,3 | < 0,3 | < 0,3 | < 0,3 | < 0,3 | < 0,3 | < 0,3 |
| Cu | 0,3 | < 0,2 | 0,2 | < 0,3 | < 0,3 | < 0,3 | 0,3 | 0,3 |
| Na | 396 | 48 | 93 | 92 | 263 | 176 | 335 | 8,2 |

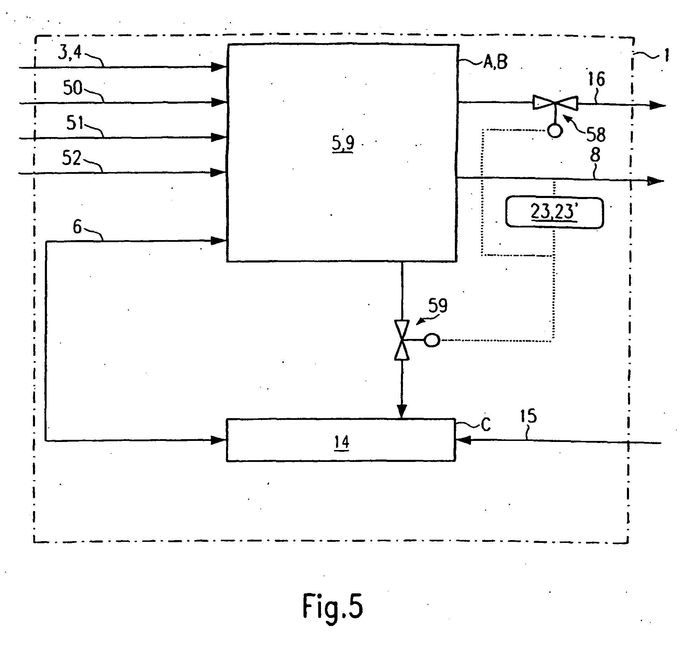

Eine letzte Versuchsreihe wurde mit dem schematischen Versuchsaufbau der Fig. 5 gefahren. In Fig. 5 sind dabei die Bezugszeichen der Fig. 1 und 2 für Elemente mit ähnlicher oder gleicher Funktion verwendet.

Mit dem Aufbau der Fig. 5 wurde die dem Pulper 5 rückgeführte Menge an Presswasser dem Eisen- und Kupfergehalt der ausgepressten Cellulose angepasst.

Bei der Anordnung der Fig. 5 wurde durch die Sensoren 23, 23' (vgl. Fig. 1) als für den Metallionen-Gehalt repräsentative Werte der Eisenionen- und Kupferionengehalt gemessen.

Durch die Steuerung des Anteils des Presswassers in dem dem Pulper 5 zugeführten Wasser 6 wurde die Eisenkonzentration möglichst knapp unterhalb 10 mg/kg atro und die Kupferkonzentration knapp unterhalb 0,5 mg/kg atro gehalten. Diese Werte waren für eine ausreichende Stabilität der Celluloselösung in der Leitung 8 bei gleichzeitig maximaler Einbehaltung des Presswassers innerhalb des Systems 1 und demzufolge minimaler Ausschleusung des Presswassers 16 aus dem System 1 möglich.

Die Steuerung des Metallionen-Gehaltes erfolgte in der Weise, dass bei Überschreiten eines dieser beiden Grenzwerte die aus dem System 1 ausgeschleuste, zur Abwasserreinigungsanlage geführte Presswassermenge durch Öffnen eines Ventils 58 erhöht wurde. Gleichzeitig wurde durch Schließen des Ventils 59 der Anteil an rückgeführtem Presswasser im Vorbehandlungsschritt reduziert.

Falls eine direkte Verpulpung der Cellulose 3, 4 in Aminoxid stattfindet, so kann die erfindungsgemäße Einstellung des Metallionen-Gehalts auch über das aus dem Spinnbad 28 wiedergewonnene tertiäre Aminoxid erreicht werden. Hierzu kann in Abhängigkeit von dem Metallionen-Gehalt, wie er von den Sensoren 23 und 23' erfasst wird, sowie in Abhängigkeit von dem vorab in der Cellulose 3, 4 bestimmten Metallionen-Gehalt, der Reinigungsgrad am Metallionen-Filter 37 und/oder der Anteil des frisch zugeführten tertiären Aminoxids 36 zu dem regenerierten tertiären Aminoxid 34 eingestellt werden. Die Steuerung funktioniert damit ähnlich wie bei der Presswasserrückführung.

In einer Abwandlung des in Fig. 1 beschriebenen Verfahrens kann in der Wiedergewinnungseinrichtung 30 aus dem Spinnbad 28 wiedergewonnenes Wasser anstelle oder zusammen mit dem Presswasser zum Pulper 5 rückgeführt werden.

Der Metallionenfilter 37, wie er bei der Widergewinnung des tertiären Aminoxids aus dem Spinnbad 28 verwendet wird, kann selbstverständlich auch zur Reinigung des zurückgeführten Presswassers verwendet werden.

## Patentansprüche

1. Verfahren zum Herstellen einer Lycoell-Faser aus einer Spinnmasse enthaltend Wasser, Cellulose und tertiares Aminoxid, wobei die Spinnmasse durch Beimengung eines Behandlungsmediums zu einer Cellulose, zu einer Cellulosesuspension und/oder Celluloselösung hergestellt wird, **dadurch gekennzeichnet, dass** der Gehalt von wenigstens einer Art von destabilisierenden Metallionen, die zu einer destabilen Cellulosesuspension und/oder Celluloselösung mit der Gefahr einer exothermen Reaktion führen, in der Cellulosesuspension und/oder der Celluloselösung überwacht und unter einen Stabilitätsgrenzwert eingestellt wird.

2. Verfahren nach Anspruch 1, **dadurch gekennzeichnet, dass** die Menge des beigemengten Behandfungsmediums in Abhängigkeit vom Gehalt der wenigstens einen Art von destabilisierenden Metallionen eingestellt wird.

3. Verfahren nach Anspruch 1 oder 2, **dadurch gekennzeichnet, dass** das beigemengte Behandlungsmedium aus einem nachfolgenden Verfahrensschritt wiedergewonnen wird.

4. Verfahren nach Anspruch 3, **dadurch gekennzeichnet, dass** der Gehalt von der wenigstens einen Art von Metallionen im Behandfungsmedium bei der Wiedergewinnung verringert wird.

5. Verfahren nach einem der oben genannten Ansprüche, **dadurch gekennzeichnet, dass** ein Teil des Behandtungsmediums aus dem Herstellprozess ausgeschleust wird und dass die Menge des ausgeschleusten Behandlungsmediums vom Gehalt der wenigstens einen Art von destabilisierenden Metallionen In der Cellulose, der Cellulosesuspension und/oder der Celluloselösung abhängt

6. Verfahren nach einem der oben genanten Ansprüche, **dadurch gekennzeichnet, dass** mit dem wiedergewonnen Behandlungsmedium gleichzeitig ein frisches Behandlungsmedium beigemengt wird.

7. Verfahren nach Anspruch 6, **dadurch gekennzeichnet, dass** die Anteile vom wiedergewonnenen und vom frischen Behandlungsmedium in Abhängigkeit vom Gehalt der wenigstens einen Art von Metallionen eingestellt werden.

8. Verfahren nach einem der oben genannten Ansprüche, **dadurch gekennzeichnet, dass** das Behandlungsmedium automatisch dosiert wird.

9. Verfahren nach einem der oben genannten Ansprüche, **dadurch gekennzeichnet, dass** das Behandlungsmedium im Wesentlichen Wasser ist.

10. Verfahren nach Anspruch 9, **dadurch gekennzeichnet, dass** das wiedergewonnene Wasser durch Abpressen der Cellulosesuspension gewonnen wird.

11. Verfahren nach Anspruch 9 oder 10, **dadurch gekennzeichnet, dass** das wiedergewonnene Wasser aus einem Spinnbad (28) für die extrudierte Spinnmasse gewonnen wird.

12. Verfahren nach einem der oben genannten Ansprüche, **dadurch gekennzeichnet, dass** das Behandlungsmedium ein tertiäres Aminoxid ist.

13. Verfahren nach Anspruch 12, **dadurch gekennzeichnet, dass** das tertiäre Aminoxid aus einem Spinnbad (28) für die extrudierte Spinnmasse (2) gewonnen wird.

14. Verfahren nach einem der oben genannten Ansprüche, **dadurch gekennzeichnet, dass** die wenigstens eine Art von destabilisierenden Metallionen Eisenionen umfasst.

15. Verfahren nach einem der oben genannten Ansprüche, **dadurch gekennzeichnet, dass** die wenigstens eine Art von destabilisierenden Metallionen Kupferionen umfasst.

16. Verfahren nach einem der oben genannten Ansprüche, **dadurch gekennzeichnet, dass** der Gehalt der wenigstens einen Art von destabilisierenden Metallionen unter 10 mg/kg eingestellt wird.

17. Verfahren nach einem der oben genannten Ansprüche, **dadurch gekennzeichnet, dass** der Gehalt der wenigstens einen Art von destabilisierenden Metallionen unter 0,5 mg/kg eingestellt wird.

18. Verfahren nach einem der oben genannten Ansprüche, **dadurch gekennzeichnet, dass** der Stabilitätsgrenzwert von der wenigstens einen Art von destabilisierenden Metallionen abhängt.

19. Verfahren nach einem der oben genannten Ansprüche, **dadurch gekennzeichnet, dass** das Behandlungsmedium im Bereich einer Scherzone zugeführt wird.

20. Vorrichtung zur Herstellung von Lyocell-Fasern, mit einer Mischeinrichtung (5, 19, 22), in der eine Cellulose (3, 4) eine Cellulosesuspension und/oder Celluloselösung mit einem Behandlungsmedium beaufschlagbar ist, **gekennzeichnet durch** wenigstens einen Sensor (23, 23'), **durch** den der Gehalt von wenigstens einer Art von Metallionen, die zu einer destabilen Cellulosesuspension und/oder-Celluloselosung mit der Gefahr einer exothermen Reaktion führen, in der Cellulose, der Cellulosesuspension und/oder der Celluloselösung erfassbar und ein für den Gehalt der wenigstens einen Art von Metallionen repräsentatives Steuersignal ausgebbar ist, und **durch** eine Steuereinrichtung (17), **durch** welche der Gehalt der wenigstens einen Art von Metallionen in der Cellulosesuspension und/oder der Celluloselösung in Abhängigkeit vom Steuersignal unter einem Stabilitätsgrenzwert einstellbar ist.

## Claims

1. Method for producing a Lyocell fibre from a spinning mass containing water, cellulose and tertiary amine oxide, wherein the spinning mass is produced by adding a treatment medium to a cellulose, to a cellulose suspension and / or cellulose solution, **characterised in that** the content of at least one type of destabilising metal ion, leading to an instable cellulose suspension and/or cellulose solution with the risk of an exothermic reaction, in the cellulose suspension and / or cellulose solution is monitored and adjusted below a stability limit.

2. Method according to Claim 1, **characterised in that** the quantity of the added treatment medium is adjusted in dependence of the content of the at least one type of destabilising metal ion.

3. Method according to Claim 1 or 2, **characterised in that** the added treatment medium is recovered in a following process step.

4. Method according to Claim 3, **characterised in that** the content of the at least one type of metal ion is reduced in the treatment medium during the recovery.

5. Method according to one of the above mentioned claims, **characterised in that** a part of the treatment medium is discharged from the production process and that the quantity of the discharged treatment medium depends on the content of the at least one type of destabilising metal ion in the cellulose, cellulose suspension and / or cellulose solution.

6. Method according to one of the above mentioned claims, **characterised in that** a fresh treatment medium is added simultaneously with the recovered treatment medium.

7. Method according to Claim 6, **characterised in that** the proportions of recovered and fresh treatment medium are adjusted in dependence of the content of the at least one type of metal ion.

8. Method according to one of the above mentioned claims, **characterised in that** the treatment medium is dosed automatically.

9. Method according to one of the above mentioned claims, **characterised in that** the treatment medium is essentially water.

10. Method according to Claim 9, **characterised in that** the recovered water is obtained by expressing the cellulose suspension.

11. Method according to Claim 9 or 10, **characterised in that** the recovered water is obtained from a spinning bath (28) for the extruded spinning mass.

12. Method according to one of the above mentioned claims, **characterised in that** the treatment medium is a tertiary amine oxide.

13. Method according to Claim 12, **characterised in that** the tertiary amine oxide is obtained from a spinning bath (28) for the extruded spinning mass (2).

14. Method according to one of the above mentioned claims, **characterised in that** the at least one type of destabilising metal ion comprises iron ions.

15. Method according to one of the above mentioned claims, **characterised in that** the at least one type of destabilising metal ion comprises copper ions.

16. Method according to one of the above mentioned claims, **characterised in that** the content of the at least one type of destabilising metal ion is adjusted to below 10 mg/kg.

17. Method according to one of the above mentioned claims, **characterised in that** the content of the at least one type of destabilising metal ion is adjusted to below 0.5 mg/kg.

18. Method according to one of the above mentioned claims, **characterised in that** the stability limit depends on the at least one type of destabilising metal ion.

19. Method according to one of the above mentioned claims, **characterised in that** the treatment medium is fed in a section of a shear zone.

20. Device for the production of Lyocell fibres, with a mixing device (5, 19, 22), in which a cellulose (3, 4), cellulose suspension and / or cellulose solution can be charged with a treatment medium, **characterised by** at least one sensor (23, 23') by which the content of at least one type of metal ion, leading to an instable cellulose suspension and/or the cellulose solution with the risk of an exothermic reaction, in the cellulose, cellulose suspension and / or cellulose solution can be acquired and a control signal representing the content of the at least one type of metal ion can be output, and by a control device (17) by which the content of the at least one type of metal ion in the cellulose suspension and / or cellulose solution can be adjusted below a stability limit in dependence of the control signal.

## Revendications

1. Procédé pour la production d'une fibre Lyocell à partir d'une masse de filage contenant de l'eau, de la cellulose et un oxyde d'amine tertiaire, dans lequel la masse de filage est produite par l'ajout d'un milieu de traitement à une cellulose, à une suspension de cellulose et / ou à une solution de cellulose, **caractérisé en ce que** la teneur d'au moins un type d'ions métalliques déstabilisants, qui conduisent à une suspension de cellulose déstabilisée et / ou solution de cellulose déstabilisée avec le risque d'une réaction exothermique, est contrôlée dans la suspension de cellulose et / ou la solution de cellulose et ajustée au-dessous d'une limite de stabilité.

2. Procédé selon la revendication 1, **caractérisé en ce que** la quantité du milieu de traitement ajouté est ajustée en fonction de la teneur de l'au moins un type d'ions métalliques déstabilisants.

3. Procédé selon la revendication 1 ou 2, **caractérisé en ce que** le milieu de traitement ajouté est récupéré dans une étape de procédé suivante.

4. Procédé selon la revendication 3, **caractérisé en ce que** la teneur de l'au moins un type d'ions métalliques est réduite dans le milieu de traitement pendant la récupération.

5. Procédé selon l'une des revendications précédentes, **caractérisé en ce qu'**une partie du milieu de traitement est éliminée du procédé de production et **en ce que** la quantité du milieu de traitement éliminé dépend de la teneur de l'au moins un type d'ions métalliques déstabilisants dans la cellulose, la suspension de cellulose et / ou la solution de cellulose.

6. Procédé selon l'une des revendications précédentes, **caractérisé en ce qu'**un milieu de traitement frais est ajouté en même temps que le milieu de traitement récupéré.

7. Procédé selon la revendication 6, **caractérisé en ce que** les proportions du milieu de traitement récupéré et du milieu de traitement frais sont ajustées en fonction de la teneur de l'au moins un type d'ions métalliques.

8. Procédé selon l'une des revendications précédentes, **caractérisé en ce que** le milieu de traitement est dosé de manière automatique.

9. Procédé selon l'une des revendications précédentes, **caractérisé en ce que** le milieu de traitement est essentiellement de l'eau.

10. Procédé selon la revendication 9, **caractérisé en ce que** l'eau récupérée est obtenue par expression de la suspension de cellulose.

11. Procédé selon la revendication 9 ou 10, **caractérisé en ce que** l'eau récupérée est obtenue à partir d'un bain de filage (28) pour la masse de filage extrudée.

12. Procédé selon l'une des revendications précédentes, **caractérisé en ce que** le milieu de traitement est un oxyde d'amine tertiaire.

13. Procédé selon la revendication 12, **caractérisé en ce que** l'oxyde d'amine tertiaire est obtenu à partir d'un bain de filage (28) pour la masse de filage extrudée (2).

14. Procédé selon l'une des revendications précédentes, **caractérisé en ce que** l'au moins un type d'ions métalliques déstabilisants comprend des ions fer.

15. Procédé selon l'une des revendications précédentes, **caractérisé en ce que** l'au moins un type d'ions métalliques déstabilisants comprend des ions cuivre.

16. Procédé selon l'une des revendications précédentes, **caractérisé en ce que** la teneur de l'au moins un type d'ions métalliques déstabilisants est ajustée au-dessous de 10 mg / kg.

17. Procédé selon l'une des revendications précédentes, **caractérisé en ce que** la teneur de l'au moins un type d'ions métalliques déstabilisants est ajustée au-dessous de 0,5 mg / kg.

18. Procédé selon l'une des revendications précédentes, **caractérisé en ce que** la limite de stabilité dépend de l'au moins un type d'ions métalliques déstabilisants.

19. Procédé selon l'une des revendications précédentes, **caractérisé en ce que** le milieu de traitement est introduit dans une région d'une zone de cisaillement.

20. Dispositif pour la production de fibres Lyocell, comprenant un dispositif de mélange (5, 19, 22), dans lequel une cellulose (3, 4), une suspension de cellulose et / ou une solution de cellulose peut être chargée avec un milieu de traitement, **caractérisé en ce qu'**au moins un capteur (23, 23'), par lequel la teneur d'au moins un type d'ions métalliques, qui conduisent à une suspension de cellulose déstabilisée et / ou solution de cellulose déstabilisée avec le risque d'une réaction exothermique, dans la cellulose, la suspension de cellulose et / ou la solution de cellulose peut être enregistrée et un signal de commande représentatif de la teneur de l'au moins un type d'ions métalliques peut être émis, et **en ce qu'**un dispositif de commande (17), par lequel la teneur de l'au moins un type d'ions métalliques dans la suspension de cellulose et / ou la solution de cellulose peut être ajustée au-dessous d'une limite de stabilité en fonction du signal de commande.
